# FASCICULE DE BREVET EUROPEEN

(11) **EP 2 998 587 B1**
(45) Date de publication et mention de la délivrance du brevet: **25.07.2018**
(21) Numéro de dépôt: 14194372.0
(22) Date de dépôt: 21.11.2014
(51) Int. Cl.: F16K 31/42, F15B 13/043, F15B 13/02, F16K 31/06

(54) **Clapet de régulation pilotable par une commande pour ajuster sa pression de régulation**
Drosselklappe, die über eine Steuerung zur Anpassung des Drosseldrucks steuerbar ist
Control valve controlled by a control to adjust the control pressure thereof

(30) Priorité: 22.09.2014 FR 1458906
(43) Date de publication de la demande: 23.03.2016
(73) Titulaire: Bontaz Centre R&D, 74460 Marnaz (FR)
(72) Inventeur: Perotto, Stéphane, Pascal, 74130 AYZE (FR); Taupeau, Anthony, Raymond, Arthur, 74330 POISY (FR); Salomon, Cyrille, Yves, 74300 SAINT SIGISMOND (FR)
(74) Mandataire: Brevalex

(56) Documents cités:
- FR-A1- 2 307 154
- US-A- 4 089 168

## Description

### DOMAINE TECHNIQUE

L'invention concerne un clapet de régulation, agencé par exemple pour réguler la pression dans un circuit en s'ouvrant pour la faire baisser lorsque celle-ci devient trop importante.

### ETAT DE LA TECHNIQUE ANTERIEURE

Un tel clapet de régulation, qui peut être utilisé dans différentes applications, permet notamment de sécuriser un circuit pressurisé en évitant que la pression du fluide que contient ce circuit ne devienne trop élevée. D'une manière plus générale, un tel clapet vise à moduler la pression dans le circuit.

En pratique, un tel clapet comporte un corps qui renferme un tiroir monté coulissant, et qui comporte une ouverture d'entrée et une ouverture de sortie s'étendant de part et d'autre du tiroir en étant orientés perpendiculairement à sa direction de déplacement.

Ce tiroir qui a une forme générale de révolution s'apparentant à celle d'un piston comporte une tête au contact du fluide circulant dans le circuit, et une base en appui sur un ressort de tarage ayant lui-même son autre extrémité en appui sur le fond du corps.

Lorsque la pression du fluide est inférieure à une valeur seuil dépendant principalement de la valeur de tarage du ressort, le tiroir occupe une position fermée dans laquelle il est éloigné du fond du corps, et dans laquelle il obture les ouvertures d'entrée et de sortie de ce corps.

Lorsque la pression dans le circuit devient supérieure à la valeur seuil, le tiroir dont la tête subit cette pression se rapproche du fond du corps en se déplaçant à l'encontre du ressort de tarage, pour atteindre une position dite d'ouverture. Dans cette position d'ouverture, le tiroir libère les ouvertures d'entrée et de sortie du corps pour les mettre en communication l'une avec l'autre. Ceci provoque l'écoulement de fluide hors du circuit pour faire baisser la pression interne en deçà de la valeur seuil.

Ce tiroir qui a une forme générale de piston comporte par exemple une gorge circulaire externe, de sorte que lorsqu'il occupe la position ouverte, cette gorge est au niveau de l'ouverture d'entrée et de sortie pour les mettre en communication l'une avec l'autre. Il peut aussi comporter un ou des perçages radiaux traversants pour réaliser cette fonction d'ouverture lorsqu'il occupe la position adéquate.

D'une manière générale, la pression qui déclenche l'ouverture du clapet est fixe du fait qu'elle est conditionnée principalement par la valeur de tarage du ressort. Cette valeur de tarage peut éventuellement être modifiée manuellement, mais seulement de façon ponctuelle, par exemple au montage ou lors d'une opération de maintenance.

Le document FR 2307154 décrit un clapet de régulation de la pression avec un tiroir dont une extrémité est soumise à la pression à réguler et non pas à la pression de commande.

Le but de l'invention est de proposer une structure de clapet permettant de piloter la pression de déclenchement selon la situation.

### RESUME DE L'INVENTION

A cet effet, l'invention a pour objet un clapet de régulation pour maintenir la pression d'un fluide contenu dans un circuit soit au-dessous soit au-dessus d'une pression de consigne, ce clapet de régulation comprenant un corps dans lequel est monté un tiroir coulissant entre une position d'ouverture et une position de fermeture, ce tiroir ayant une extrémité destinée à être soumise à la pression du fluide à réguler, le corps comprenant deux ouvertures dont une est destinée à être reliée au circuit, le tiroir obturant ces deux ouvertures lorsqu'il est en position de fermeture, le tiroir mettant les deux ouvertures en communication l'une avec l'autre lorsqu'il est en position d'ouverture pour transférer du fluide soit hors du circuit pour faire baisser la pression régnant dans ce circuit au-dessous de la pression de consigne, soit vers le circuit pour faire monter la pression régnant dans ce circuit au-dessus de la pression de consigne, caractérisé en ce qu'il comporte une chambre de pilotage délimitée par le corps et par le tiroir se déplaçant à l'encontre de la pression dans cette chambre de pilotage, la pression de consigne du fluide à réguler étant conditionnée par la pression dans cette chambre de pilotage, cette chambre de pilotage étant destinée à être reliée à des moyens de régulation de la pression dans cette chambre de pilotage.

Avec cette architecture, la pression de consigne pour le fluide peut être modifiée simplement en jouant sur la pression dans la chambre de pilotage, au moyen d'un actionneur ou autre. La pression de consigne peut ainsi être modifiée en cours de fonctionnement, c'est-à-dire en fonction des conditions d'exploitation du circuit que ce clapet équipe.

L'invention concerne également un tel clapet de régulation, dans lequel pourvu de moyens de régulation de la pression dans la chambre de pilotage comprennent un canal d'alimentation en pression de cette chambre de pilotage la mettant en communication avec le fluide à réguler, et un organe régulateur comprenant un piston de régulation mobile entre une position de fermeture et une position d'ouverture dans laquelle il met en communication la chambre de pilotage avec l'extérieur via un canal de délestage, un ressort de régulation rappelant le piston de régulation vers sa position de fermeture et des moyens d'ajustement du tarage de ce ressort de régulation.

L'invention concerne également un tel clapet de régulation, dans lequel les moyens d'ajustement du tarage du ressort de régulation comprennent un noyau mobile faisant partie d'un actionneur apte à piloter la position de ce noyau mobile, le ressort de régulation étant interposé entre le noyau mobile et le piston de régulation.

L'invention concerne également un tel clapet de régulation, dans lequel le noyau mobile est métallique et dans lequel l'actionneur comporte une bobine électrique et des moyens d'alimentation électrique de cette bobine pour qu'elle attire ou repousse ce noyau mobile.

L'invention concerne également un tel clapet de régulation, dans lequel l'actionneur est un actionneur de type électrovanne.

L'invention concerne également un tel clapet de régulation, dans lequel l'actionneur est un actionneur de type électrovanne à commande binaire.

L'invention concerne également un tel clapet de régulation, dans lequel l'actionneur est un actionneur de type électrovanne à commande proportionnelle.

L'invention concerne également un tel clapet de régulation, comportant un ressort de compression tendant continuellement à rappeler le noyau mobile vers le piston de régulation en comprimant le ressort de régulation, pour que la pression de consigne soit maximale en cas de désactivation de l'actionneur pilotant la position du noyau mobile.

L'invention concerne également un tel clapet de régulation, comportant un ressort de compression tendant continuellement à écarter le noyau mobile du piston de régulation en relâchant le ressort de régulation, pour que la pression de consigne soit minimale en cas de désactivation de l'actionneur pilotant la position du noyau mobile.

### BREVE DESCRIPTION DES DESSINS

La figure 1 est une vue en coupe montrant un clapet de régulation selon l'invention permettant de maintenir la pression au-dessous d'une pression de consigne de un bar et qui est fermé lorsqu'il est soumis à une pression de fluide inférieure à un demi bar en étant piloté pour s'ouvrir en cas de pression de ce fluide supérieure à un bar ;
La figure 2 est une vue de détail montrant l'organe régulateur du clapet de la figure 1 piloté pour réguler la pression dans la chambre de pilotage à un demi bar afin de provoquer l'ouverture du clapet en cas de pression supérieure à un bar ;
La figure 3 est une vue en coupe du clapet de régulation de la figure 1 soumis à une pression de fluide comprise entre un demi bar et un bar lorsqu'il est piloté pour s'ouvrir en cas de pression de ce fluide supérieure à un bar ;
La figure 4 est une vue en coupe du clapet de régulation de la figure 1 ouvert lorsqu'il est soumis à une pression de fluide supérieure à un bar en étant piloté pour s'ouvrir en cas de pression de ce fluide supérieure à un bar ;
La figure 5 est une vue de détail montrant l'organe régulateur du clapet de la figure 1 piloté pour réguler la pression dans la chambre de pilotage à trois bars afin de provoquer l'ouverture du clapet en cas de pression du fluide supérieure à trois bars et demi ;
La figure 6 est une vue de détail montrant l'organe régulateur du clapet de la figure 1 piloté pour réguler la pression dans la chambre de pilotage à un bar trois quarts afin de provoquer l'ouverture du clapet en cas de pression du fluide supérieure à deux bars un quart.

### EXPOSE DETAILLE DE MODES DE REALISATION PARTICULIERS

L'idée à la base de l'invention est de prévoir une chambre de pilotage au niveau du ressort de tarage, de pressuriser cette chambre au moyen du fluide du circuit avec lequel elle communique via un conduit de faible diamètre, et de réguler la pression dans cette chambre avec un actionneur électrique de type électrovanne permettant de la mettre en communication avec l'extérieur ou de la maintenir fermée suivant la situation.

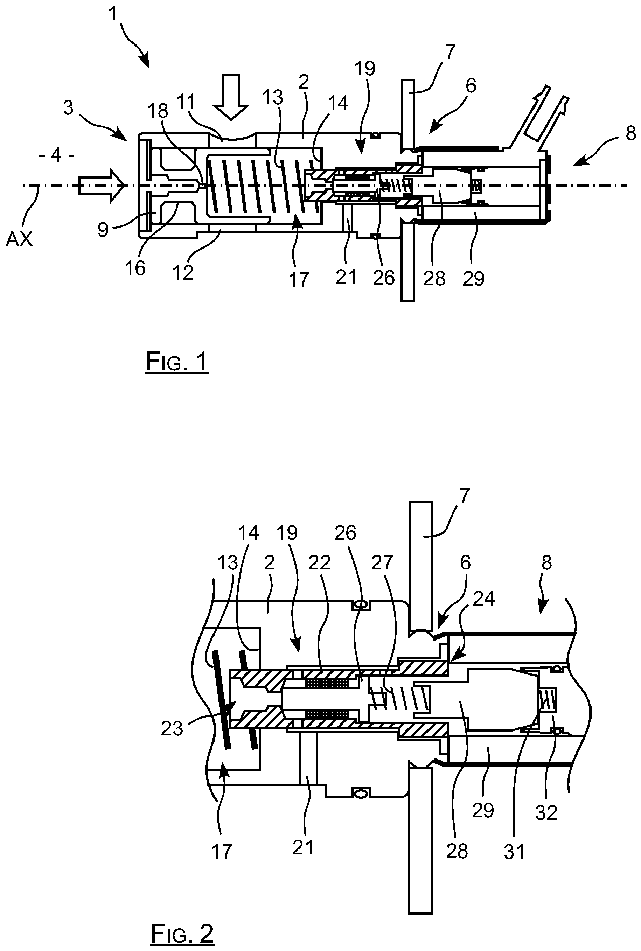

Le clapet selon l'invention qui est représenté dans la figure 1 où il est repéré par 1 et qui est aussi représenté dans les autres figures, est agencé pour limiter la pression dans un circuit en la maintenant en dessous d'une valeur de pression de consigne.

Ce clapet 1 comporte un corps principal 2 comprenant une première extrémité 3 s'ouvrant vers un circuit 4 contenant le fluide à réguler et une seconde extrémité 6, opposée à la première, qui est accouplée à un actionneur électrique 8 dont elle est séparée par un support 7.

Le corps 2 qui a une forme générale de révolution renferme au niveau de sa première extrémité 3 un tiroir 9 apte à coulisser dans le corps selon la direction principale AX de ce corps 2 qui coïncide avec son axe de révolution AX. Ce corps 2 comporte une ouverture d'entrée et une ouverture de sortie, repérées par 11 et 12 qui sont situées de part et d'autre du tiroir 9 en s'étendant radialement par rapport à la direction AX.

Le tiroir 9 a une forme générale de révolution s'apparentant à celle d'un piston dont la tête est au contact du fluide à réguler 4, via l'ouverture de la première extrémité 3 du corps 2 renfermant ce tiroir 9. La base de ce tiroir 9 est quant à elle en appui sur un ressort de tarage 13 ayant lui-même son extrémité opposée en appui sur le fond intérieur 14 du corps 2.

Ce ressort de tarage 13 tend ainsi continuellement à rappeler le tiroir 9 vers sa position de fermeture, dans laquelle il est le plus éloigné du fond 14, ce qui correspond à la situation de la figure 1. Dans l'exemple des différentes figures, ce ressort de tarage 13 est dimensionné pour exercer sur le tiroir 9 un effort correspondant à une pression de un demi bar appliquée sur toute la section ou surface transversale de ce tiroir 9.

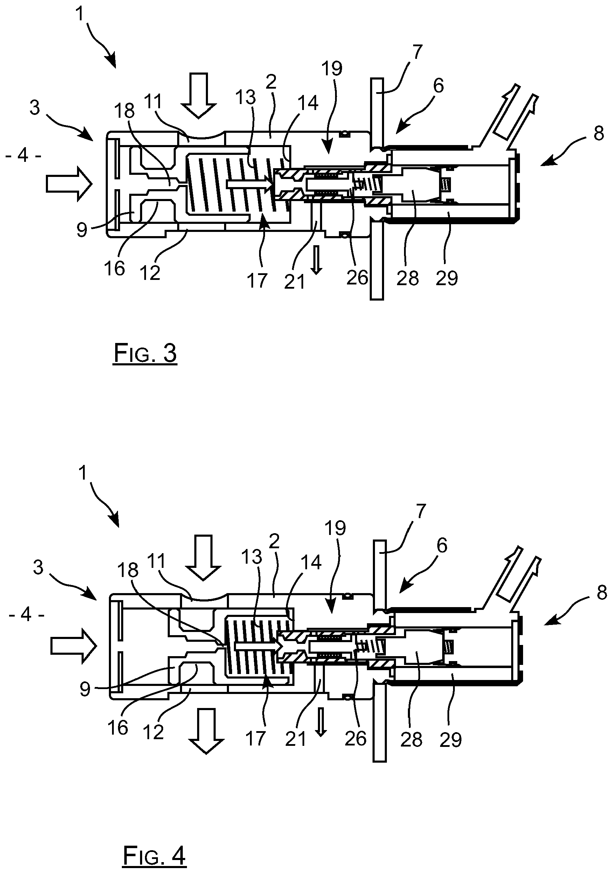

Comme visible dans la figure 1, le tiroir 9 comporte à environ la moitié de sa longueur une gorge externe circonférentielle 16 de forte section, permettant le passage du fluide lorsque ce tiroir 9 est en position d'ouverture. Dans la situation de la figure 1, le tiroir 9 est au contraire en position de fermeture, la gorge 16 étant alors décalée par rapport aux ouvertures 11 et 12, pour les maintenir obturées. Lorsque le clapet est ouvert, comme par exemple dans la figure 4, le tiroir 9 s'est rapproché du fond 14, de sorte que la gorge 16 est alors en vis-à-vis des ouvertures 11 et 12 pour les mettre en communication l'une avec l'autre afin de permettre l'écoulement de fluide.

L'espace située entre la base du tiroir 9 et le fond 14, dans lequel est logé le ressort de tarage 13 est une chambre de pilotage 17 du clapet 1 dans laquelle la pression est régulée à une certaine valeur qui conditionne la pression du fluide 4 provoquant l'ouverture du clapet.

Cette chambre de pilotage 17 est pressurisée au moyen du fluide à réguler 4 avec lequel elle est en communication par un orifice ou capillaire de faible section 18 qui traverse le tiroir 9 pour que du fluide 4 puisse le traverser ce tiroir ou piston 9 depuis sa tête vers sa base.

Le niveau de pression dans cette chambre de pilotage 17 est piloté par un organe régulateur 19 visible de manière plus détaillée dans la figure 2, pour la maintenir à une valeur de consigne, qui vaut un demi bar dans les configurations des figures 1 à 4, afin de provoquer l'ouverture du clapet en cas de pression de fluide supérieure à un bar.

Cet organe régulateur 19 peut maintenir la chambre 17 fermée pour faire monter sa pression à la valeur de la pression du fluide à réguler 4, ou l'ouvrir vers l'extérieur via un canal 21 pour faire baisser cette pression. Le canal 21 présente une section supérieure à celle du canal 18 pour améliorer la réactivité de régulation. En fonctionnement, l'organe régulateur 19 peut se trouver partiellement ouvert pour maintenir la pression de la chambre 17 à la valeur de consigne, cette consigne étant comprise entre la pression extérieure et la pression du fluide 4.

Cet organe régulateur 19 comporte un corps de régulation 22 représenté en noir, ayant une forme creuse généralement de révolution, et qui constitue un composants fixe qui est emboîté dans un perçage correspondant du corps 2. Ce perçage qui s'étend selon l'axe AX traverse le corps 2 en mettant en communication le fond 14 de ce corps avec la seconde extrémité 6 de ce corps. Ce perçage est fermé par l'emboîtement du corps de régulation 22.

Le corps de régulation 22 comporte une première extrémité 23 formant ouverture d'admission qui débouche dans la chambre de pilotage 17, et une seconde extrémité opposée 24 qui débouche dans la seconde extrémité 6 du corps pour être reliée à l'actionneur 8.

Ce corps de régulation 22 renferme un piston de régulation 26 apte à coulisser le long de ce corps 22, selon l'axe AX, entre une position de fermeture correspondant à celle qu'il occupe dans les figures 1 et 2, et une position ouverte correspondant à celle qu'il occupe dans les figures 3 et 4.

Dans la position de fermeture, le piston de régulation 26 est déporté vers l'ouverture d'admission 23 pour la maintenir fermée, ce qui correspond à une situation dans laquelle la pression dans la chambre de pilotage 17 augmente ou bien est égale à la pression du fluide à réguler 4. Dans la position d'ouverture, le piston de régulation 26 s'écarte au contraire de l'ouverture d'admission 23 en se déplaçant vers la seconde extrémité 24 du corps de régulation 22 pour ouvrir cette admission 23 afin de laisser passer le fluide depuis la chambre 17 vers le canal 21 pour faire baisser la pression dans la chambre 17.

Ce piston de régulation 26 est continuellement rappelé vers sa position de fermeture par un ressort de régulation 27 qui est situé an niveau de la seconde extrémité du corps de régulation 22. Ce ressort de régulation 27 est plus précisément interposé entre le piston de régulation 26 et un noyau mobile 28 de l'actionneur 8, ce qui permet d'ajuster le tarage, c'est-à-dire l'effort exercé par ce ressort de régulation 27 sur le piston de régulation 26, et par là même, la pression dans la chambre de pilotage 17.

L'actionneur 8 qui est accouplé à la seconde extrémité 6 du corps 2 en ayant son noyau 28 en appui sur le ressort de régulation 27, et en ayant son propre corps rigidement solidarisé à cette seconde extrémité 6, est un actionneur électromagnétique de type électrovanne. Il est capable de déplacer le noyau 28 le long de l'axe AX pour le rapprocher ou pour l'éloigner du piston de régulation 26 pour compresser ou décompresser le ressort de régulation 27, ce qui permet d'ajuster le niveau d'effort exercé par ce ressort 27 sur le piston de régulation 26.

Cet actionneur 8 comporte ainsi principalement une bobine électromagnétique 29 entourant le noyau 28, ainsi qu'un ressort de compression 31 interposé entre le noyau 28 et une entretoise 32 située au fond du corps de cet actionneur.

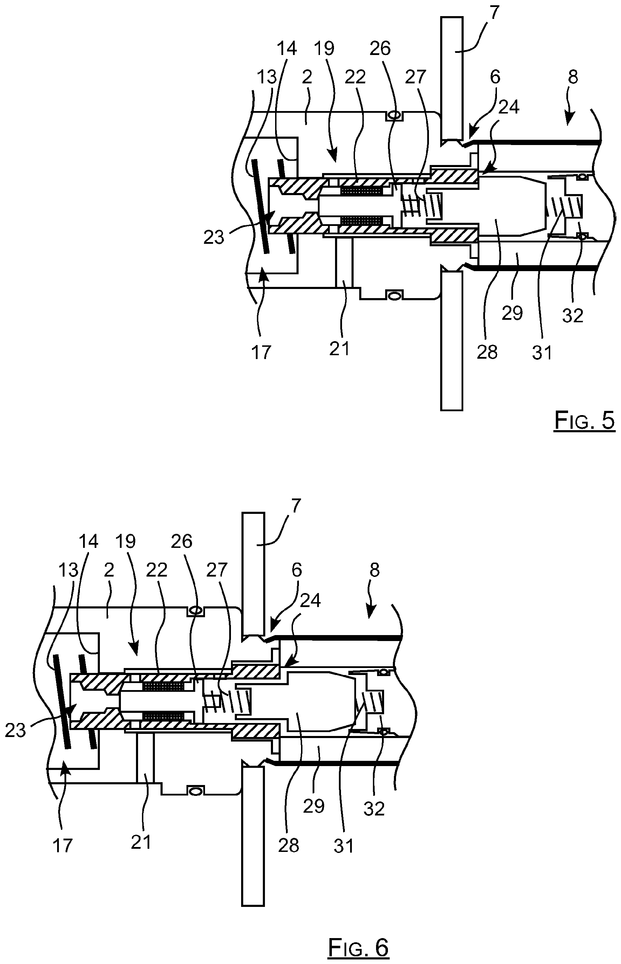

Le ressort de compression 31 exerce un effort qui est supérieur à celui qu'exerce le ressort de régulation 27, de sorte que lorsque la bobine 29 n'est pas alimentée électriquement, le noyau mobile 28 est rapproché au maximum du piston de régulation 27 pour exercer sur celui-ci un effort maximal. Dans ce cas qui correspond à la situation de la figure 5, la pression dans la chambre de pilotage 17 peut atteindre une valeur maximale qui vaut ici trois bars, et au-delà de laquelle le piston de régulation 26 se déplace pour faire baisser cette pression afin de la réguler.

Lorsque la bobine 29 est alimentée électriquement, elle éloigne au contraire le noyau mobile 28 du piston de régulation 27, à l'encontre du ressort de compression 31 qu'elle comprime alors. Lorsque l'alimentation électrique est à sa puissance maximale, le ressort de régulation 27 a ainsi une longueur maximale, exerçant un effort minimum sur le piston de régulation 26. Dans ce cas qui correspond à la situation des figures 1 à 4, la pression dans la chambre de pilotage 17 est limitée à une valeur qui est ici d'un demi bar, au-delà de laquelle le piston de régulation 26 se déplace pour faire baisser cette pression afin de la réguler.

Lorsque la bobine 29 est alimentée avec une puissance intermédiaire, le noyau mobile 28 se place dans une position médiane, exerçant alors un effort moyen sur le ressort 27 qui a alors une longueur intermédiaire pour exercer un effort modéré sur le piston de régulation 26. Dans ce cas qui correspond par exemple à celui de la figure 6, la pression dans la chambre de pilotage 17 est limitée à une valeur qui vaut ici un bar trois quarts, au-delà de laquelle le piston de régulation 26 s'ouvre pour réguler la pression dans cette chambre 17.

Ainsi, dans la situation des figures 1 à 4, l'actionneur 8 est alimenté électriquement avec une puissance maximale pour que la pression dans la chambre de pilotage 17 soit régulée à un demi bar, le ressort de tarage 13 exerçant quant à lui un effort supplémentaire correspondant à un demi bar sur le tiroir 9. Le tiroir 9 est alors soumis à des efforts du côté du ressort de tarage correspondant à une pression de un bar.

Dans la situation de la figure 1 où la pression du fluide 4 est inférieure à un demi bar, le tiroir 9 reste dans sa position fermée, de sorte que la pression du fluide 4 dans le circuit reste quant à elle inférieure à un demi bar.

Lorsque la pression du fluide 4 augmente pour être comprise entre un demi et un bar, comme dans la figure 3, la pression tend à augmenter dans la chambre 17 au-delà d'un demi bar : le piston de régulation 26 s'ouvre alors pour libérer l'excédent de pression de la chambre 17 par l'évent 21. La pression dans la chambre 17 étant ainsi maintenue à une valeur de un demi bar, le tiroir 9 est ainsi soumis du côté de sa tête à une pression comprise entre un demi et un bar. Il est soumis du côté de sa base à une pression de un bar (un demi bar exercé par la chambre de pilotage 17 et environ un demi bar exercé par le ressort de régulation 17).

Dans ces conditions, le tiroir 9 reste fermé, mais dès que la pression du fluide 4 dépasse un bar, ce tiroir 9 est déséquilibré et commence à se déplacer vers le fond 14, à l'encontre du ressort de tarage 13, comme représenté dans la figure 3. Il convient de noter que le tiroir 9 peut commencer à se déplacer partiellement, comme illustré sur la figure 3, avant que la pression de fluide 4 n'atteigne un bar, du fait que l'effort exercé par le ressort de tarage 13 lorsqu'il est détendu est en fait légèrement inférieur à un demi bar. C'est au fur et à mesure que ce ressort 13 se comprime pendant que le tiroir 9 atteint la position d'ouverture, que l'effort exercé par ce ressort 13 sur le tiroir augmente pour atteindre la valeur d'un demi bar lorsque son allongement correspond à la position d'ouverture pour le tiroir 9.

Lorsque la pression du fluide 4 atteint et dépasse un bar, ce qui correspond à la situation de la figure 4, le tiroir 9 se place en position d'ouverture en étant le plus proche du fond 14, sa gorge 16 étant alors en vis-à-vis des ouvertures 11 et 12 pour permettre via ces ouvertures l'évacuation du fluide vers l'extérieur du circuit. Dans cette situation, le piston de régulation 26 reste ouvert de manière à maintenir la pression dans la chambre 17 à un demi bar.

Ainsi, selon le dimensionnement du clapet des figures, lorsque l'actionneur 8 est alimenté à une puissance électrique maximale, cela provoque la régulation de la pression de la chambre de pilotage à un demi bar pour ouvrir le clapet en cas de pression du fluide 4 supérieure à un bar, attendu que le tarage du ressort 13 correspond lui aussi à un demi bar.

Lorsque l'alimentation de l'actionneur 8 est complètement désactivée, le noyau mobile 28 est repoussé par le ressort de compression 31, de sorte que ce noyau 28 exerce alors un effort maximal sur le ressort de régulation 27 qui est de fait plus fortement comprimé. Dans cette situation, la pression dans la chambre 17 doit monter à une valeur supérieure, qui est ici de trois bars, pour ouvrir le piston de régulation 26 à l'encontre du ressort 27. Ainsi, selon ce pilotage, à savoir lorsque la bobine inductrice 29 n'est pas alimentée, le tiroir 9 s'ouvre en cas de pression de fluide 4 supérieure à trois bars et demi, selon un processus identique à celui décrit pour les figures 1 à 4, à la différence près que le noyau 28 est alors continuellement déporté vers la gauche sur les figures, comme illustré sur la figure 5.

De manière analogue, l'actionneur 8 peut être alimenté avec une puissance électrique intermédiaire pour placer le noyau mobile 28 en position médiane, afin que le clapet s'ouvre lorsque la pression du fluide 4 atteint une valeur intermédiaire. Dans l'exemple de la figure 6, le noyau mobile 28 occupe une position médiane le long de l'axe AX, de sorte que l'organe régulateur 19 assure alors une régulation de la pression dans la chambre 17 à un bar trois quarts, pour que le clapet s'ouvre en cas de pression du fluide supérieure à deux bars un quart. Le fonctionnement est alors analogue à celui des figures 1 à 4, à la différence près que le noyau mobile 28 occupe alors une position médiane illustré sur la figure 6.

L'alimentation électrique de la bobine 29 de l'actionneur 8 à une puissance intermédiaire peut être assurée par modulation du courant injecté de type RCO ou PWM signifiant Rapport Cyclique d'Ouverture en Français, et Power Width Modulation en Anglais.

Dans ce cas le courant injecté dans la bobine est un signal de type créneau dont le rapport cyclique est modulé pour que la puissance moyenne injectée corresponde à une valeur souhaitée. Lorsque le rapport cyclique est maximum, la puissance injectée est constante et correspondant à la valeur nominale. Lorsqu'il est nul, la puissance injectée est nulle. Lorsque ce rapport cyclique vaut un demi, la puissance injectée correspond à la moitié de la puissance nominale, pour placer le noyau mobile 28 en position médiane.

Toute valeur intermédiaire de rapport cyclique peut ainsi être utilisée, ce qui permet de piloter le clapet pour qu'il s'ouvre à toute valeur de pression souhaitée comprise entre un bar et trois bars et demi pour un clapet ayant le dimensionnement de celui des figures. Autrement dit, la structure du clapet selon l'invention permet de piloter sa pression de consigne de manière proportionnelle pour qu'elle puisse prendre toute valeur comprise entre deux valeurs extrêmes.

Comme on le comprend, les valeurs extrêmes de un bar et trois bars et demi correspondent à l'exemple des figures, mais ces valeurs peuvent être changées sans sortir du cadre de l'invention, simplement en modifiant le dimensionnement des différents composants du clapet. Par exemple, une modification du ressort de tarage 13 pour qu'il exerce sur le tiroir 9 un effort correspondant à un bar et non pas à un demi bar permet de déplacer la plage de pilotage du clapet pour qu'il s'ouvre à une pression de fluide pouvant être choisie entre un bar et demi et quatre bars.

Ainsi, le clapet selon l'invention permet de piloter la valeur de pression de consigne du fluide à partir de laquelle il doit s'ouvrir, cette pression de consigne pouvant être à une valeur minimale, valant un bar dans l'exemple décrit, lorsque l'actionneur est alimenté, ou à une valeur maximale, valant trois bars et demi dans l'exemple décrit, lorsque l'actionneur n'est pas alimenté électriquement. De plus, une modulation de l'alimentation électrique de cet actionneur permet d'ajuster la pression de consigne à toute valeur intermédiaire.

D'une manière plus générale, si l'on note P1 la pression correspondant à l'effort exercé par le ressort de tarage 17, et P2 la pression correspondant à l'effort exercé par le ressort de régulation 27 sur le piston 26, la pression d'ouverture du clapet des figures vaut P1 + P2. La valeur de P2 est ajustable en modulant la commande pour augmenter ou diminuer les efforts exercés par le noyau mobile 28 sur le ressort de régulation 27.

Dans l'exemple des figures, c'est un actionneur électrique qui agit sur le noyau mobile 28 pour piloter la pression de consigne, mais il est possible d'agir sur le noyau par un circuit pneumatique ou par tout autre moyen permettant d'exercer un effort modulable sur ce noyau mobile.

Par ailleurs, dans le clapet illustré sur les figures, la pression de consigne est maximale lorsque l'actionneur 8 n'est pas alimenté électriquement, et elle est minimale lorsqu'il est alimenté pour rapprocher le noyau 28 de l'entretoise 32 à l'encontre du ressort de compression 31.

Il est possible de prévoir un fonctionnement inverse, en agençant le ressort de compression pour qu'il tende continuellement à rapprocher le noyau mobile de l'entretoise au lieu de l'en éloigner. Avec cet agencement, non représenté sur les figures, la pression de consigne est au contraire minimale lorsque l'actionneur n'est pas alimenté électriquement et elle devient maximale lorsque cet actionneur est alimenté pour écarter le noyau mobile de l'entretoise.

Par ailleurs, le clapet des figures est agencé pour maintenir la pression dans le circuit au-dessous de la valeur de consigne, mais de manière tout à fait analogue, un tel clapet peut être au contraire agencé pour maintenir la pression dans le circuit au-dessus de la valeur de consigne.

Dans ce cas, le tiroir comporte une gorge de mise en communication des ouvertures du corps qui est décalée pour être plus proche de la chambre de pilotage que dans l'exemple des figures. Ce tiroir occupe alors une position d'ouverture lorsqu'il est écarté du fond du corps, et une position de fermeture dans laquelle il met en communication les ouvertures du corps lorsqu'il est au contraire rapproché du fond.

Ainsi, le tiroir se ferme en se rapprochant du fond du corps dès que la pression est suffisante dans le circuit et il s'ouvre pour admettre un fluide pressurisé via l'une ou l'autre des ouvertures du corps dès que la pression dans le circuit est inférieure à la pression de consigne. Comme on l'aura compris, dans cette autre configuration, l'une des ouvertures du corps de clapet est reliée au circuit à réguler et l'autre ouverture de ce corps de clapet est reliée à une alimentation en fluide qui est à une pression supérieure à la pression de consigne.

Comme on l'aura compris, le clapet selon l'invention est utilisable pour réguler la pression d'un circuit d'huile, d'eau, de liquide de frein, de liquide de refroidissement, c'est-à-dire d'une manière générale de tout type de fluide à l'état liquide ou gazeux.

Le clapet selon l'invention peut avantageusement être intégré à une pompe pour réguler le niveau en sortie de pompe et renvoyer l'excédent de fluide en entrée de pompe, de manière à pouvoir ajuster la pression de régulation en fonction des conditions d'exploitation de la pompe en question.

## Revendications

1. Clapet de régulation (1) pour maintenir la pression d'un fluide contenu dans un circuit soit au-dessous soit au-dessus d'une pression de consigne, ce clapet de régulation (1) comprenant un corps (2) dans lequel est monté un tiroir coulissant (9) entre une position d'ouverture et une position de fermeture, ce tiroir (9) ayant une extrémité destinée à être soumise à la pression du fluide (4) à réguler, le corps (2) comprenant deux ouvertures (11, 12) dont une est destinée à être reliée au circuit, le tiroir (9) obturant ces deux ouvertures lorsqu'il est en position de fermeture, le tiroir (9) mettant les deux ouvertures (11, 12) en communication l'une avec l'autre lorsqu'il est en position d'ouverture pour transférer du fluide soit hors du circuit pour faire baisser la pression régnant dans ce circuit au-dessous de la pression de consigne, soit vers le circuit pour faire monter la pression régnant dans ce circuit au-dessus de la pression de consigne, **caractérisé en ce qu'**il comporte une chambre de pilotage (17) délimitée par le corps (2) et par le tiroir (9) se déplaçant à l'encontre de la pression dans cette chambre de pilotage (17), la pression de consigne du fluide à réguler étant conditionnée par la pression dans cette chambre de pilotage (17), cette chambre de pilotage (17) étant destinée à être reliée à des moyens de régulation de la pression dans cette chambre de pilotage (17).

2. Clapet de régulation (1) selon la revendication 1, pourvu de moyens de régulation de la pression dans la chambre de pilotage (17) comprennent un canal d'alimentation en pression (18) de cette chambre de pilotage (17) la mettant en communication avec le fluide à réguler (4), et un organe régulateur (19) comprenant un piston de régulation (26) mobile entre une position de fermeture et une position d'ouverture dans laquelle il met en communication la chambre de pilotage (17) avec l'extérieur via un canal de délestage (21), un ressort de régulation (27) rappelant le piston de régulation (26) vers sa position de fermeture et des moyens d'ajustement du tarage de ce ressort de régulation (26).

3. Clapet de régulation (1) selon la revendication 2, dans lequel les moyens d'ajustement du tarage du ressort de régulation (26) comprennent un noyau mobile (28) faisant partie d'un actionneur (8) apte à piloter la position de ce noyau mobile (28), le ressort de régulation (27) étant interposé entre le noyau mobile (28) et le piston de régulation (27).

4. Clapet de régulation selon la revendication 2, dans lequel le noyau mobile (28) est métallique et dans lequel l'actionneur comporte une bobine électrique (29) et des moyens d'alimentation électrique de cette bobine (29) pour qu'elle attire ou repousse ce noyau mobile (28).

5. Clapet de régulation (1) selon la revendication 4, dans lequel l'actionneur (8) est un actionneur de type électrovanne.

6. Clapet de régulation (1) selon la revendication 5, dans lequel l'actionneur (8) est un actionneur de type électrovanne à commande binaire.

7. Clapet de régulation (1) selon la revendication 5, dans lequel l'actionneur (8) est un actionneur de type électrovanne à commande proportionnelle.

8. Clapet de régulation selon l'une des revendications 3 à 7, comportant un ressort de compression (31) tendant continuellement à rappeler le noyau mobile (28) vers le piston de régulation (26) en comprimant le ressort de régulation (27), pour que la pression de consigne soit maximale en cas de désactivation de l'actionneur (8) pilotant la position du noyau mobile (28).

9. Clapet de régulation selon l'une des revendications 3 à 7, comportant un ressort de compression (31) tendant continuellement à écarter le noyau mobile (28) du piston de régulation (26) en relâchant le ressort de régulation (27), pour que la pression de consigne soit minimale en cas de désactivation de l'actionneur (8) pilotant la position du noyau mobile (28).

10. Pompe équipée d'un clapet de régulation (1) selon l'une des revendications précédentes.

## Patentansprüche

1. Drosselklappe (1), um den Druck eines in einer Schaltung enthaltenen Fluids unter oder über einem Solldruck zu halten, wobei diese Drosselklappe (1) einen Körper (2) umfasst, in dem ein Gleitschieber (9) zwischen einer Öffnungsposition und einer Verschlussposition montiert ist, wobei dieser Schieber (9) ein Ende hat, das dazu bestimmt ist, dem Druck des zu drosselnden Fluids (4) ausgesetzt zu sein, wobei der Körper (2) zwei Öffnungen (11, 12) umfasst, von denen eine dazu bestimmt ist, mit der Schaltung verbunden zu sein, wobei der Schieber (9) diese zwei Öffnungen verschließt, wenn er in der Verschlussposition ist, wobei der Schieber (9) die zwei Öffnungen (11, 12) miteinander in Verbindung bringt, wenn er in der Öffnungsposition ist, um Fluid entweder aus der Schaltung abzuleiten, um den in dieser Schaltung herrschenden Druck unter den Solldruck zu senken, oder zu der Schaltung zuzuleiten, um den in dieser Schaltung herrschenden Druck über den Solldruck zu erhöhen, **dadurch gekennzeichnet, dass** sie eine Steuerkammer (17) umfasst, die von dem Körper (2) und dem Schieber (9), der sich gegen den Druck in dieser Steuerkammer (17) verschiebt, begrenzt ist, wobei der Druck des zu drosselnden Fluids durch den Druck in dieser Steuerkammer (17) bedingt ist, wobei diese Steuerkammer (17) dazu bestimmt ist, mit Mitteln zur Regelung des Drucks in dieser Steuerkammer (17) verbunden zu sein.

2. Drosselklappe (1) nach Anspruch 1, die mit Mitteln zur Anpassung des Drucks in der Steuerkammer (17) versehen ist, umfassend einen Druckversorgungskanal (18) dieser Steuerkammer (17), der sie mit dem zu drosselnden Fluid (4) in Verbindung bringt, und ein Regelelement (19), umfassend einen Regulierungskolben (26), der zwischen einer Verschlussposition und einer Öffnungsposition, in der er die Steuerkammer (17) über den Ableitungskanal (21) mit außen in Verbindung bringt, beweglich ist, eine Regulierungsfeder (27), die den Regulierungskolben (26) in seine Verschlussposition zurückstellt, und Mittel zur Anpassung der Tarierung dieser Regulierungsfeder (26).

3. Drosselklappe (1) nach Anspruch 2, bei der die Mittel zur Anpassung der Tarierung der Regulierungsfeder (26) einen beweglichen Kern (28) umfassen, der Teil eines Aktuators (8) ist, der geeignet ist, die Position dieses beweglichen Kerns (28) zu steuern, wobei die Regulierungsfeder (27) zwischen dem beweglichen Kern (28) und dem Regulierungskolben (27) zwischengefügt ist.

4. Drosselklappe nach Anspruch 2, bei der der bewegliche Kern (28) metallisch ist, und bei der der Aktuator eine elektrische Spule (29) und Mittel zur elektrischen Versorgung dieser Spule (29) umfasst, so dass sie diesen beweglichen Kern (28) anzieht oder abstößt.

5. Drosselklappe (1) nach Anspruch 4, bei der der Aktuator (8) ein Aktuator vom Typ Magnetventil ist.

6. Drosselklappe (1) nach Anspruch 5, bei der der Aktuator (8) ein Aktuator vom Typ Magnetventil mit Binärsteuerung ist.

7. Drosselklappe (1) nach Anspruch 5, bei der der Aktuator (8) ein Aktuator vom Typ Magnetventil mit Proportionalsteuerung ist.

8. Drosselklappe nach einem der Ansprüche 3 bis 7, umfassend eine Kompressionsfeder (31), die kontinuierlich dazu neigt, den beweglichen Kern (28) zu dem Regulierungskolben (26) durch Komprimieren der Regulierungsfeder (27) zurückzuführen, so dass der Solldruck im Falle einer Deaktivierung des Aktuators (8), der die Position des beweglichen Kerns (28) steuert, maximal ist.

9. Drosselklappe nach einem der Ansprüche 3 bis 7, umfassend eine Kompressionsfeder (31), die kontinuierlich dazu neigt, den beweglichen Kern (28) von dem Regulierungskolben (26) durch Entspannen der Regulierungsfeder (27) zu entfernen, so dass der Solldruck im Falle einer Deaktivierung des Aktuators (8), der die Position des beweglichen Kerns (28) steuert, minimal ist.

10. Pumpe, die mit einer Drosselklappe (1) nach einem der vorhergehenden Ansprüche ausgestattet ist.

## Claims

1. A control valve (1) to maintain the pressure of a fluid contained in a circuit either below or above a pressure setting, this control valve (1) comprising a body (2) in which a slide valve (9) is mounted between an open position and a closed position, this slide valve (9) having one end intended to be subject to the pressure of the fluid (4) to be regulated, the body (2) comprising two openings (11, 12), one of which is intended to be connected to the circuit, the slide valve (9) closing off these two openings when it is in the closed position, the slide valve (9) placing the two openings (11, 12) in communication with one another when it is in the open position to transfer fluid either outside the circuit to decrease the pressure prevailing in this circuit below the pressure setting, or toward the circuit to increase the pressure prevailing in the circuit above the pressure setting, **characterized in that** it includes a control chamber (17) delimited by the body (2) and by the slide valve (9) moving against the pressure in this control chamber (17), the pressure setting of the fluid to be controlled being conditioned by the pressure in this control chamber (17), this control chamber (17) being intended to be connected to means for regulating the pressure in this control chamber (17).

2. The control valve (1) according to claim 1, provided with means for controlling the pressure in the control chamber (17) comprising a pressure supply channel (18) of this control chamber (17) placing it in communication with the fluid to be controlled (4), and a control member (19) comprising a control piston (26) movable between a closed position and an open position in which it places the control chamber (17) in communication with the outside via a dumping channel (21), a control spring (27) returning the control piston (26) toward its closed position and means for adjusting the taring of this control spring (26).

3. The control valve (1) according to claim 2, wherein the means for adjusting the taring of the control spring (26) comprise a moving core (28) that is part of an actuator (8) able to control the position of this moving core (28), the control spring (27) being inserted between the moving core (28) and the control piston (27).

4. The control valve according to claim 2, wherein the moving core (28) is made from metal and wherein the actuator includes an electric coil (29) and means for supplying electricity to this coil (29) so that it attracts or repels this moving core (28).

5. The control valve (1) according to claim 4, wherein the actuator (8) is an actuator of the solenoid valve type.

6. The control valve (1) according to claim 5, wherein the actuator (8) is an actuator of the binary control solenoid valve type.

7. The control valve (1) according to claim 5, wherein the actuator (8) is an actuator of the proportional control solenoid valve type.

8. The control valve according to one of claims 3 to 7, including a compression spring (31) tending to continually to return the mobile core (28) toward the control piston (26) while compressing the control spring (27), so that the pressure setting is maximal in case of deactivation of the actuator (8) controlling the position of the moving core (28).

9. The control valve according to one of claims 3 to 7, including a compression spring (31) continually tending to separate the moving core (28) from the control piston (26) while releasing the control spring (27), so that the pressure setting is minimal in case of deactivation of the actuator (8) controlling the position of the moving core (28).

10. A pump equipped with a control valve (1) according to one of the preceding claims.
